# EUROPEAN PATENT APPLICATION

(11) **EP 4 432 581 A1**
(43) Date of publication of application: **18.09.2024**
(21) Application number: 22891606.0
(22) Date of filing: 05.09.2022
(51) Int. Cl.: H04B 10/077

(54) **STANDBY OPTICAL CHANNEL PERFORMANCE DETECTION METHOD AND PERFORMANCE DETECTION SYSTEM FOR OTN NETWORK**

(30) Priority: 09.11.2021 CN 202111319669
(71) Applicant: ZTE Corporation, Shenzhen, Guangdong 518057 (CN)
(72) Inventor: JIA, Yinqiu, Shenzhen, Guangdong 518057 (CN); SHI, Hu, Shenzhen, Guangdong 518057 (CN); WU, Qiong, Shenzhen, Guangdong 518057 (CN); FENG, Zhenhua, Shenzhen, Guangdong 518057 (CN); SU, Xing, Shenzhen, Guangdong 518057 (CN); FU, Qi, Shenzhen, Guangdong 518057 (CN); WU, Juan, Shenzhen, Guangdong 518057 (CN)
(74) Representative: Savi, Massimiliano
(86) International application number: PCT/CN2022/117132
(87) International publication number: WO 2023/082801

(57) **Abstract**

Disclosed in the present application are a standby optical channel performance detection method and performance detection system for an OTN network, The OTN network comprises a local node. an end node and an optical path to be detected connecting the local node to the end node. The method comprises: configuring a light source generator at an idle port that can reach the optical path to be detected, wherein the light source generator comprises an optical amplifier, an optical filter, a tunable laser and a coupler, and the optical amplifier is cascaded with the optical filter and then is coupled to the tunable laser by means of the coupler (S 110), configuring a detection light source, wherein the detection light source comprises a wavelength to be measured and a filling wavelength, the wavelength to be measured is generated by the tunable laser, and the filling wavelength is generated by the optical amplifier and the optical filter (S 120); and calling an optical label detection point in the optical path to be detected to measure optical power of the wavelength to be measured, so as to obtain optical performance of a standby optical channel corresponding to the wavelength to be measured(S 130).

## Description

### CROSS-REFERENCE TO RELATED APPLICATION

This application is filed on the basis of Chinese patent application No. 202111319669.3 filed November 09, 2021, and claims priority to the Chinese patent application, the entire contents of which are incorporated herein by reference.

### TECHNICAL FIELD

The present disclosure relates to the field of transport network communication, and in particular, to a standby optical channel performance testing method and performance testing system for an Optical Transport Network (OTN).

### BACKGROUND

Optical transport network (OTN) technology is a novel optical transport system, which inherits the advantages of Synchronous Digital Hierarchy (SDH) networks and wavelength division multiplexing (WDM) networks, and has the advantages of high capacity and satisfactory management and control mechanism. The OTN technology can realize the functions of transmission, exchange, and multiplexing of signals at various granularities. In addition, the OTN can also support a variety of upper-layer services and protocols, and is an important networking technology for optical bearer networks.

Survivability is an important indicator and technology in OTNs. The survivability of OTN services often need to be ensured by protection and restoration methods. For a restoration technology, there are a large number of idle optical path resources in the network to provide restoration path resources for faulty services. When the network operates normally, there is no service light on these idle optical paths. The optical path performance of these idle optical paths cannot be monitored using conventional technologies. If a fault occurs in these optical paths or an optical path performance parameter of these optical paths is unsatisfactory, the operation and maintenance system of the network cannot perceive the fault. When a service becomes faulty and is switched to these idle paths, the service cannot be successfully restored due to the fault of the optical paths or the unsatisfactory optical path performance, resulting in long interruption of the service and seriously affecting the quality of service of the network. At present, how to acquire optical performance of an idle optical channel in a network without Optical Performance Monitoring (OPM) has become a problem to be solved.

### SUMMARY

An objective of the present disclosure is to solve one of the technical problems in the existing technologies and provide a standby optical channel performance testing method and performance testing system for an OTN.

In accordance with a first aspect of the present disclosure, an embodiment provides a standby optical channel performance testing method for an OTN, where the OTN includes a local node, an end node, and a to-be-measured optical path connecting the local node and the end node, the method including: configuring a light source generator at an idle port which allows access to the to-be-measured optical path, where the light source generator includes an Optical Amplifier (OA), an optical filter, a tunable laser, and a coupler, and the OA is cascaded with the optical filter and then is coupled to the tunable laser by the coupler; configuring a measurement light source, where the measurement light source includes a wavelength to be measured and a filling wavelength, the wavelength to be measured is generated by the tunable laser, and the filling wavelength is generated by the OA and the optical filter; and calling an optical label measurement point in the to-be-measured optical path to measure an optical power of the wavelength to be measured, to obtain optical performance of a standby optical channel corresponding to the wavelength to be measured.

In accordance with a second aspect of the present disclosure, an embodiment provides a standby optical channel performance testing system for an OTN, including: a local node; an end node; an to-be-measured optical path, configured for connecting the local node and the end node; a light source generator, configured at an idle port which allows access to the to-be-measured optical path, where the light source generator includes an OA, an optical filter, a tunable laser, and a coupler, the OA is cascaded with the optical filter and then is coupled to the tunable laser by the coupler, the light source generator is configured for configuring a measurement light source, the measurement light source includes a wavelength to be measured and a filling wavelength, the wavelength to be measured is generated by the tunable laser, and the filling wavelength is generated by the OA and the optical filter; and an optical label measurement point, located in the to-be-measured optical path, and configured for measuring an optical power of the wavelength to be measured, to obtain optical performance of a standby optical channel corresponding to the wavelength to be measured.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims, and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

The present disclosure is further described below in conjunction with the accompanying drawings and embodiments.
FIG. 1 is a flowchart of a standby optical channel performance testing system for an OTN according to an embodiment of the present disclosure;
FIG. 2 is a schematic structural diagram of a light source generator according to an embodiment of the present disclosure;
FIG. 3 is a schematic structural diagram of another light source generator according to an embodiment of the present disclosure;
FIG. 4 is a flowchart of a standby optical channel performance testing system for an OTN according to another embodiment of the present disclosure;
FIG. 5 is a diagram showing an abstract topology of an OTN according to an embodiment of the present disclosure;
FIG. 6 is a diagram showing a network configuration of an A-C-Z path according to an embodiment of the present disclosure; and
FIG. 7 is a diagram showing a network configuration according to another embodiment of the present disclosure.

### DETAILED DESCRIPTION

This section will give a detailed description of some embodiments of the present disclosure. Preferred embodiments of the present disclosure are shown in the accompanying drawings. The function of the accompanying drawings is to use drawings to supplement the description of the text part of the specification, such that those having ordinary skills in the art can intuitively and vividly understand each technical feature and the overall technical scheme of the present disclosure, but the accompanying drawings are not intended to be construed as limiting the scope of protection of the present disclosure.

In the description of the present disclosure, the terms such as "first", "second" and the like used herein are merely used for distinguishing technical features, and are not intended to indicate or imply relative importance, or implicitly point out the number of the indicated technical features, or implicitly point out a precedence order of the indicated technical features.

In the description of the present disclosure, unless otherwise explicitly defined, the terms such as "configure", "install/mount" and "connect" should be understood in a broad sense, and those having ordinary skills in the art can reasonably determine the specific meanings of the above terms in the present disclosure based on the specific contents of the technical scheme.

Embodiments of the present disclosure provide a standby optical channel performance testing method and performance testing system for an OTN, to measure a power of an optical path of an optical fiber to acquire an optical performance parameter of an optical channel.

The embodiments of the present disclosure will be further described in detail below in conjunction with the accompanying drawings.

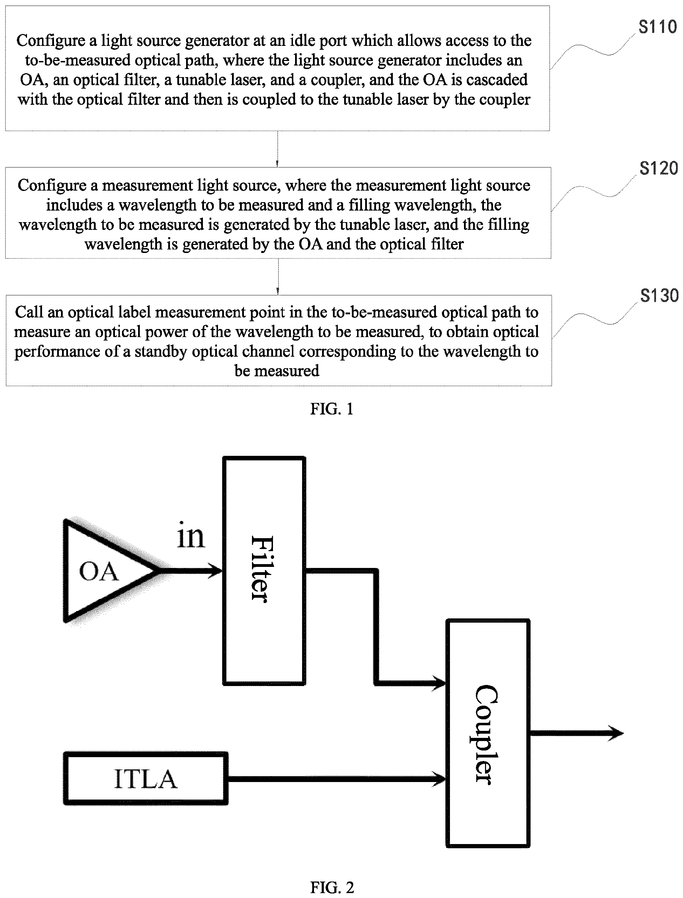

Referring to FIG. 1, in accordance with a first aspect of the present disclosure, an embodiment provides a standby optical channel performance testing method for an OTN. The OTN includes a local node, an end node, and a to-be-measured optical path connecting the local node and the end node. The method includes the following steps S110 to S130.

At S110, a light source generator is configured at an idle port which allows access to the to-be-measured optical path, where the light source generator includes an OA, an optical filter, a tunable laser, and a coupler, and the OA is cascaded with the optical filter and then is coupled to the tunable laser by the coupler.

It should be noted that the optical filter may be an Arrayed Waveguide Grating (AWG), a Wavelength selective Switch (WSS), an Optical Channel Interleaver (OCI), or other wave combining/splitting devices with a filtering function.

In an embodiment, the idle port is a port of the local node or a port which allows access to the to-be-measured optical path at a remote node.

It can be understood that, a measurement light source needs to be connected to the network through an idle port. In an embodiment, the idle port is an optical switch, an add port or a loopback port of a WSS, an add port or a loopback port of a coupler type combiner, or an add port of an AWG device; and the OA is an Erbium Doped Fiber Amplifier (EDFA). If the local node does not have a suitable port to connect the light source generator, the light source generator may be connected through a remote node.

At S120, a measurement light source is configured, where the measurement light source includes a wavelength to be measured and a filling wavelength, the wavelength to be measured is generated by the tunable laser, and the filling wavelength is generated by the OA and the optical filter.

FIG. 2 shows a hardware configuration of the measurement light source. An EDFA OA is cascaded with an optical filter, and then is coupled by a coupler to a tunable laser (e.g., Integrated Tunable Laser Assembly (ITLA)) which can load an optical label. With such a configuration, a measurement light source with an adjustable center frequency and carrying an optical label can be generated. In addition, a wide-spectrum light source can be generated through an Amplified Spontaneous Emission (ASE) mode of the OA, and a variable number of filling wavelengths with a variable center frequency and a variable spectral width can be formed through the cascading with the filter.

At S 130, an optical label measurement point in the to-be-measured optical path is called to measure an optical power of the wavelength to be measured, to obtain optical performance of a standby optical channel corresponding to the wavelength to be measured.

In an embodiment, the optical label measurement point is deployed on an optical amplification board and a receive end in the to-be-measured optical path.

It should be noted that after optical powers of channels obtained by respective measurement points are acquired, a variety of evaluation methods can be used to acquire an Optical Signal-to-Noise Ratio (OSNR) of an idle optical channel. Evaluation of an OSNR of a channel based on an optical power of the channel have been described in various studies and patent applications, and therefore will not be described in detail in the present disclosure.

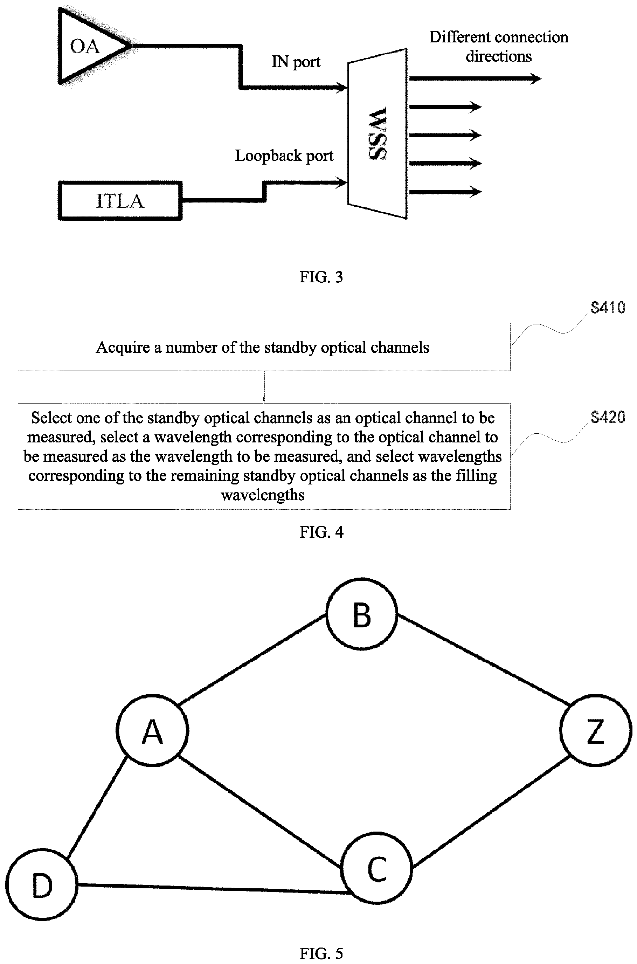

Referring to FIG. 3, in another embodiment, the optical filter and the coupler in the light source generator are replaced by a WSS, the OA is connected to an add port of the WSS, and the tunable laser is connected to a loopback port of the WSS.

FIG. 3 shows a structure of a light source generator using a commercial WSS as a filter. Generally, a commercial WSS includes an IN port connected to an OA in an ASE state and a loopback port connected to an ITLA. Such a light source networking method makes use of the combining function of the commercial WSS, and thus can save one coupler.

Referring to FIG. 4, in an embodiment, configuring the measurement light source in S 120 includes the following steps S410 to S420.

At S410, a number of the standby optical channels is acquired.

At S420, one of the standby optical channels is selected as an optical channel to be measured, a wavelength corresponding to the optical channel to be measured is selected as the wavelength to be measured, and wavelengths corresponding to the remaining standby optical channels are selected as the filling wavelengths.

In an embodiment, each of the standby optical channels is sequentially selected as the optical channel to be measured until a number of the standby optical channels that have not been measured is zero.

It can be understood that when multiple services are restored at the same time, multiple services of different wavelengths are switched over one optical path at the same time. Optical path performance measured by existing idle path measurement methods based on a single measurement wavelength is different from actual performance after the switching. The reason is that in a state of multiple operating wavelengths, transmission of multiple wavelengths in the optical fiber is affected by many nonlinear effects such as a Raman power transfer effect, leading to the transfer of a power of a short wave to a long wave. Therefore, for a multi-service restoration scenario, it is necessary to perform multiple dummy wavelength fillings for the to-be-measured optical path to ensure that the state of the optical path obtained by idle optical path performance measurement is as close as possible to the actual state of the optical path after restoration. This problem is solved by using a plurality of filling wavelengths in the embodiments of the present disclosure.

Because there is a case where multiple services are restored at the same time, it is necessary to successively measure the optical performance of each channel to be measured. A measurement light source configuration and a measurement process of some embodiments are as follows:
selecting a center frequency to be measured, and setting a center frequency of the ITLA to the frequency to be measured; and
setting filling wavelengths. As described above, it is necessary to simulate an actual situation of the optical path after multi-service restoration, and it is necessary to configure corresponding filling wavelengths according to a service in the restored optical path and a wavelength occupied by the service. In some embodiments, the filter is controlled to enable editing of the wide-spectrum light source generated by the OA, to set the center frequency the filling wavelengths required to be generated to a pass state and set the other center frequencies to a blocked state. In particular, the ITLA has generated a wavelength to be measured, and the filter needs to set the center frequency corresponding to this wavelength to the blocked state.

An optical label measurement point at each position along the optical path is called to obtain a channel optical power of the wavelength to be measured having the center frequency set by the ITLA at the measurement point. The optical path can be further evaluated based on the obtained optical power value, which will not be described in detail in this embodiment.

If there is another wavelength frequency to be measured, a next frequency to be measured is selected, and the ITLA and the filter are configured to continue the measurement of the optical power of the optical channel, until the number of the standby optical channels that have not been measured is zero.

In an embodiment, after configuring the measurement light source in S 120 and before S130, the method further includes:
switching on an optical switch and a WSS in the to-be-measured optical path, to cause the measurement light source to reach the end node from the local node.

According to the scheme provided by the embodiment of the first aspect of the present disclosure, when an OTN operates normally, mature devices already existing in the OTN, including an OA, an optical filter, a coupler, and a tunable laser which can load an optical label, form a light source generator, which is connected to a to-be-measured optical path of an optical fiber. A power of the optical path is measured by an optical label measurement point that has been deployed in the OTN, and an OSNR of an idle optical path can be further calculated to acquire an optical performance parameter of the optical path. In addition, the light source generator can use the tunable laser to generate a measurement light with an adjustable center frequency and carrying an optical label as a measurement wavelength. In addition, a wide-spectrum light source can be generated through an ASE mode of the OA, and a variable number of filling wavelengths with a variable center frequency and a variable spectral width can be formed through the cascading with the filter. Therefore, for a multi-service restoration scenario, multiple dummy wavelength fillings are performed for the to-be-measured optical path to ensure that the state of the optical path obtained by idle optical path performance measurement is as close as possible to the actual state of the optical path after restoration, to avoid the inconsistency between the measured performance and the actual performance of the optical path after restoration, thereby improving the accuracy of measurement of the optical performance parameter.

In accordance with a second aspect of the present disclosure, an embodiment provides a standby optical channel performance testing system for an OTN, including a local node, an end node, a to-be-measured optical path, a light source generator, and an optical label measurement point. The to-be-measured optical path is configured for connecting the local node and the end node. The light source generator is configured at a light source generator at an idle port which allows access to the to-be-measured optical path. The light source generator includes an OA, an optical filter, a tunable laser, and a coupler. The OA is cascaded with the optical filter and then is coupled to the tunable laser by the coupler. The light source generator is configured for configuring a measurement light source. The measurement light source includes a wavelength to be measured and a filling wavelength. The wavelength to be measured is generated by the tunable laser. The filling wavelength is generated by the OA and the optical filter. The optical label measurement point is located in the to-be-measured optical path, and is configured for measuring an optical power of the wavelength to be measured, to obtain optical performance of a standby optical channel corresponding to the wavelength to be measured.

In an embodiment, the idle port is a port of the local node or a port which allows access to the to-be-measured optical path at a remote node.

In an embodiment, the idle port is an optical switch, an add port or a loopback port of a WSS, an add port or a loopback port of a coupler type combiner, or an add port of an AWG device.

In an embodiment, the optical filter and the coupler in the light source generator are replaced by a WSS, the OA is connected to an add port of the WSS, and the tunable laser is connected to a loopback port of the WSS.

The standby optical channel performance testing system for an OTN according to the embodiment of the second aspect of the present disclosure and the standby optical channel performance testing method for an OTN according to the embodiment of the first aspect of the present disclosure belong to the same inventive concept and therefore have the same implementation principle and effects, so the details will not be repeated here.

Objects, technical solutions, and advantages of the present disclosure will be clear from a detailed description of embodiments of the present disclosure in conjunction with the drawings.

### Embodiment one:

In a basic example, a local line port is connected to a light source, and there are a plurality of channels to be measured.

For the convenience of illustrating the principle of the scheme, this embodiment and subsequent embodiments all use a unidirectional optical path as an example. In an actual OTN, there are two-way services. Optical paths and devices that a two-way service passes through can be regarded as two independent unidirectional optical paths. Therefore, the method provided in the present disclosure is also applicable to two-way services. In the subsequent embodiments, the light source generator including the OA, the ITLA, and the commercial WSS as shown in FIG. 3 is used as an example for description.

FIG. 5 is a diagram showing an abstract topology of a network in this embodiment. The network shown in FIG. 5 includes five ROADM nodes. A fiber connection relationship between the nodes is shown in FIG. 5. In the network, there are three working path groups with the same source and same destination, respectively represented by services #1, #2, and #3, all of which are two-way wavelength services from a node A to a node Z through a node B, respectively occupying wavelengths of 192.1 THz, 192.15 THz, and 192.2 THz. A wavelength channel occupied by each service is 50 GHz wide.

If a link A-B is faulty, the three services are all restored to an A-C-Z path and respectively occupy wavelengths of 192.1 THz, 192.15 THz, and 192.2 THz.

In this embodiment, it is necessary to measure an optical channel power at each measurement point of each channel in the idle path A-C-Z when the frequencies of 192.1 THz, 192.15 THz, and 192.2 THz are all occupied.

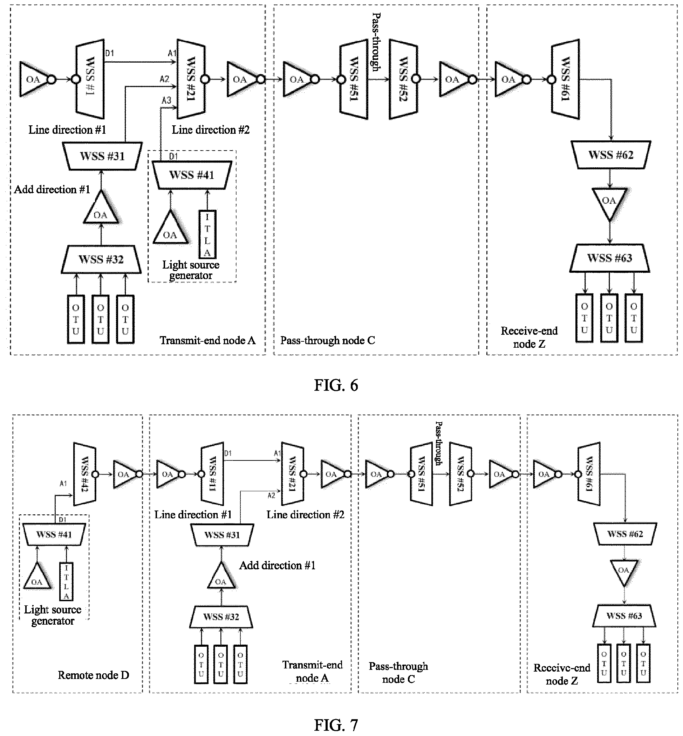

FIG. 6 is a diagram showing a network configuration of the A-C-Z path in this embodiment.

At step 1, a measurement light source is configured. There is an idle port in the transmit-end node A. An OA, a WSS #41, and an ITLA form a light source generator. A D1 port of the WSS #41 is connected to an A3 port of a WSS #21, to connect a measurement light source to a line direction #2 through the WSS #21, thus realizing the measurement of the to-be-measured optical path.

Each OA and WSS on the to-be-measured optical path are turned on. For a WSS #51 and a WSS #52, lights with the frequencies of 192.1 THz, 192.15 THz, and 192.2 THz and a width of 50 GHz are assigned to the connected ports.

At step 2-1, a first wavelength to be measured is measured. First, a wavelength of 192.1 THz is selected as the first wavelength to be measured. The center frequency of the ITLA is set to 192.1 THz, an optical label is loaded, and the wavelength of 192.1 THz from the WSS #41 is assigned to a loopback port - D1, to ensure that the measurement light source from the ITLA can be connected to the light path to be measured. The wavelengths of 192.15 THz and 192.2 THz are assigned to an IN port - D 1, to ensure that the wide-spectrum light source generated by the OA can generate two filling wavelengths of 192.15 THz and 192.2 THz after passing through the WSS #41.

Optical channel powers are measured. As shown in FIG. 6, small circles in the figure represent positions where optical label measurement points are usually deployed. The optical performance of the idle channel corresponding to 192.1 THz can be obtained by measuring the optical power at 192.1 THz.

At step 2-2, a second wavelength to be measured is measured. A wavelength of 192.15 THz is selected as the second wavelength to be measured. The center frequency of the ITLA is set to 192.15 THz, an optical label is loaded, and the wavelength of 192.15 THz from the WSS #41 is assigned to the link from the loopback port to D1 of the WSS #41 to ensure that the measurement light source from the ITLA can be connected to the light path to be measured. The wavelengths of 192.1 THz and 192.2 THz are assigned to the link from the IN port to D1 of the WSS #41 to ensure that the wide-spectrum light source generated by the OA can generate two filling wavelengths of 192.1 THz and 192.2 THz after passing through the WSS #41.

Optical channel powers are measured. The optical performance of the idle channel corresponding to 192.15 THz can be obtained by measuring the optical power at 192.15 THz.

At step 2-3, a third wavelength to be measured is measured. A wavelength of 192.2 THz is selected as the third wavelength to be measured. The center frequency of the ITLA is set to 192.2 THz, an optical label is loaded, and the wavelength of 192.2 THz from the WSS #41 is assigned to the link from the loopback port to D1 of the WSS #41 to ensure that the measurement light source from the ITLA can be connected to the light path to be measured. The wavelengths of 192.1 THz and 192.15 THz are assigned to the link from the IN port to D1 of the WSS #41 to ensure that the wide-spectrum light source generated by the OA can generate two filling wavelengths of 192.1 THz and 192.15 THz after passing through the WSS #41.

Optical channel powers are measured. The optical performance of the idle channel corresponding to 192.2 THz can be obtained by measuring the optical power at 192.2 THz.

At step 3, a result is outputted. At this moment, there is no other wavelengths to be measured, and the obtained optical performance of the frequencies of 192.1 THz, 192.15 THz, and 192.2 THz in the idle path is output.

### Embodiment two:

A remote line port is connected to a light source, with a channel of 50 GHz wide.

An abstract topology of a network in this embodiment is also as shown in FIG. 5, including five ROADM nodes. A fiber connection relationship between the nodes is shown in FIG. 5.

In the network, there are three working path groups with the same source and same destination, respectively represented by services #1, #2, and #3, all of which are two-way wavelength services from a node A to a node C through a node B, respectively occupying wavelengths of 192.1 THz, 192.15 THz, and 192.2 THz. A wavelength channel occupied by each service is 50 GHz wide.

If a link A-B is faulty, the three services are all restored to an A-C-Z path and respectively occupy wavelengths of 192.1 THz, 192.15 THz, and 192.2 THz.

In this embodiment, it is necessary to measure an optical channel power at each measurement point of each channel in the idle path A-C-Z when the frequencies of 192.1 THz, 192.15 THz, and 192.2 THz are all occupied.

FIG. 7 is a diagram showing a network configuration in this embodiment.

At step 1, a measurement light source is configured. There is no idle port at the transmit-end node A, and the measurement light source cannot be connected at the node A.

It is found that a remote node D has an idle optical path connected to the transmit-end node A, and remote measurement light may be connected to an optical path to be measured through a WSS #42 and a WSS #11. An OA, a WSS #41, and an ITLA form a light source generator. A D1 port of the WSS #41 is connected to an A1 port of the WSS #42. The frequencies of 192.1 THz, 192.15 THz, and 192.2 THz of the WSS #42 are assigned to a link from the A1 port to an OUT port of the WSS #42. The frequencies of 192.1 THz, 192.15 THz, and 192.2 THz of the WSS #11 are assigned to a link from an IN port to D1 of the WSS #11. In this way, a measurement light source is connected to a line direction #2 through the WSS #21, thus realizing the measurement of the to-be-measured optical path.

The to-be-measured optical path are turned on. For a WSS #51 and a WSS #52, lights with the frequencies of 192.1 THz, 192.15 THz, and 192.2 THz and a width of 50 GHz are assigned to the connected ports.

At step 2-1, a first wavelength to be measured is measured. First, a wavelength of 192.1 THz is selected as the first wavelength to be measured. The center frequency of the ITLA is set to 192.1 THz, an optical label is loaded, and the wavelength of 192.1 THz from the WSS #41 is assigned to a loopback port - D1, to ensure that the measurement light source from the ITLA can be connected to the light path to be measured. The wavelengths of 192.15 THz and 192.2 THz are assigned to an IN port - D 1, to ensure that the wide-spectrum light source generated by the OA can generate two filling wavelengths of 192.15 THz and 192.2 THz after passing through the WSS #41.

Optical channel powers are measured. As shown in FIG. 7, small circles in the figure represent positions where optical label measurement points are usually deployed. The optical performance of the idle channel corresponding to 192.1 THz can be obtained by measuring the optical power at 192.1 THz.

At step 2-2, a second wavelength to be measured is measured. A wavelength of 192.15 THz is selected as the second wavelength to be measured. The center frequency of the ITLA is set to 192.15 THz, an optical label is loaded, and the wavelength of 192.15 THz from the WSS #41 is assigned to the link from the loopback port to D1 of the WSS #41 to ensure that the measurement light source from the ITLA can be connected to the light path to be measured. The wavelengths of 192.1 THz and 192.2 THz are assigned to the link form the IN port to D1 of the WSS #41 to ensure that the wide-spectrum light source generated by the OA can generate two filling wavelengths of 192.1 THz and 192.2 THz after passing through the WSS #41.

Optical channel powers are measured. The optical performance of the idle channel corresponding to 192.15 THz can be obtained by measuring the optical power at 192.15 THz.

At step 2-3, a third wavelength to be measured is measured. A wavelength of 192.2 THz is selected as the third wavelength to be measured. The center frequency of the ITLA is set to 192.2 THz, an optical label is loaded, and the wavelength of 192.2 THz from the WSS #41 is assigned to the link from the loopback port to D1 of the WSS #41 to ensure that the measurement light source from the ITLA can be connected to the light path to be measured. The wavelengths of 192.1 THz and 192.15 THz are assigned to the link from the IN port to D1 of the WSS #41 to ensure that the wide-spectrum light source generated by the OA can generate two filling wavelengths of 192.1 THz and 192.15 THz after passing through the WSS #41.

Optical channel powers are measured. The optical performance of the idle channel corresponding to 192.2 THz can be obtained by measuring the optical power at 192.2 THz.

At step 3, a result is outputted. At this moment, there is no other wavelengths to be measured, and the obtained optical performance of the frequencies of 192.1 THz, 192.15 THz, and 192.2 THz in the idle path is output.

### Embodiment three:

There is neither a local idle port nor a remote idle port which can be connected to a measurement light source.

An abstract topology of a network in this embodiment is also as shown in FIG. 5, including five ROADM nodes. A fiber connection relationship between the nodes is shown in FIG. 5.

In the network, there are three working path groups with the same source and same destination, respectively represented by services #1, #2, and #3, all of which are two-way wavelength services from a node A to a node Z through a node B, respectively occupying wavelengths of 192.1 THz, 192.15 THz, and 192.2 THz. A wavelength channel occupied by each service is 50 GHz wide.

If a link A-B is faulty, the three services are all restored to an A-C-Z path and respectively occupy wavelengths of 192.1 THz, 192.15 THz, and 192.2 THz.

In this embodiment, it is necessary to measure an optical channel power at each measurement point of each channel in the idle path A-C-Z when the frequencies of 192.1 THz, 192.15 THz, and 192.2 THz are all occupied.

At this moment, the local A node has no idle port which can be connected to a measurement light source. However, the frequencies 192.1 THz, 192.15 THz, and 192.2 THz of a link A-D have been occupied, and no measurement light source can be connected through the node D. In this case, the light channel to be measured cannot be measured using the method of the present disclosure.

The embodiments of the present disclosure include: a standby optical channel performance testing method for an OTN and a standby optical channel performance testing system for an OTN. According to the schemes provided by the embodiments of the present disclosure, when an OTN operates normally, mature devices already existing in the OTN, including an OA, an optical filter, a coupler, and a tunable laser which can load an optical label, form a light source generator, which is connected to a to-be-measured optical path of an optical fiber. A power of the optical path is measured by an optical label measurement point that has been deployed in the OTN, and an OSNR of an idle optical path can be further calculated to acquire an optical performance parameter of the optical path. In addition, the light source generator can use the tunable laser to generate a measurement light with an adjustable center frequency and carrying an optical label as a measurement wavelength. In addition, a wide-spectrum light source can be generated through an ASE mode of the OA, and a variable number of filling wavelengths with a variable center frequency and a variable spectral width can be formed through the cascading of the filter. Therefore, for a multi-service restoration scenario, multiple dummy wavelength fillings are performed for the to-be-measured optical path to ensure that the state of the optical path obtained by idle optical path performance measurement is as close as possible to the actual state of the optical path after restoration, to avoid the inconsistency between the measured performance and the actual performance of the optical path after restoration, thereby improving the accuracy of measurement of the optical performance parameter.

The embodiments of the present disclosure have been described in detail above with reference to the accompanying drawings, but the present disclosure is not limited to the above embodiments, and various changes may be made within the knowledge of those having ordinary skills in the art without departing from the protection scope of the present disclosure.

## Claims

1. A standby optical channel performance testing method for an Optical Transport Network, OTN, wherein the OTN comprises a local node, an end node, and a to-be-measured optical path connecting the local node and the end node, the method comprising:
configuring a light source generator at an idle port which allows access to the to-be-measured optical path, wherein the light source generator comprises an Optical Amplifier, OA, an optical filter, a tunable laser, and a coupler, and the OA is cascaded with the optical filter and then is coupled to the tunable laser by the coupler;
configuring a measurement light source, wherein the measurement light source comprises a wavelength to be measured and a filling wavelength, the wavelength to be measured is generated by the tunable laser, and the filling wavelength is generated by the OA and the optical filter; and
calling an optical label measurement point in the to-be-measured optical path to measure an optical power of the wavelength to be measured, to obtain optical performance of a standby optical channel corresponding to the wavelength to be measured.

2. The standby optical channel performance testing method of claim 1, wherein the idle port is a port of the local node or a port which allows access to the to-be-measured optical path at a remote node.

3. The standby optical channel performance testing method of claim 1, wherein the idle port is an optical switch, an add port or a loopback port of a Wavelength Selective Switch, WSS, an add port or a loopback port of a coupler type combiner, or an add port of an Arrayed Waveguide Grating, AWG, device.

4. The standby optical channel performance testing method of claim 1, wherein the optical filter and the coupler in the light source generator are replaced by a WSS, the OA is connected to an add port of the WSS, and the tunable laser is connected to a loopback port of the WSS.

5. The standby optical channel performance testing method of claim 1 or 4, wherein the OA is an Erbium Doped Fiber Amplifier, EDFA.

6. The standby optical channel performance testing method of claim 1, wherein configuring a measurement light source comprises:
acquiring a number of the standby optical channels; and
selecting one of the standby optical channels as an optical channel to be measured, selecting a wavelength corresponding to the optical channel to be measured as the wavelength to be measured, and selecting wavelengths corresponding to the remaining standby optical channels as

7. The standby optical channel performance testing method of claim 6, wherein each of the standby optical channels is sequentially selected as the optical channel to be measured until a number of the standby optical channels that have not been measured is zero.

8. The standby optical channel performance testing method of claim 1, wherein after configuring a measurement light source, the method further comprises:
switching on an optical switch and a WSS in the to-be-measured optical path, to cause the measurement light source to reach the end node from the local node.

9. The standby optical channel performance testing method of claim 1, wherein the optical label measurement point is deployed on an optical amplification board and a receive end in the to-be-measured optical path.

10. A standby optical channel performance testing system for an Optical Transport Network, OTN, comprising:
a local node;
an end node;
a to-be-measured optical path, configured for connecting the local node and the end node;
a light source generator, configured at an idle port which allows access to the to-be-measured optical path, wherein the light source generator comprises an Optical Amplifier, OA, an optical filter, a tunable laser, and a coupler, the OA is cascaded with the optical filter and then is coupled to the tunable laser by the coupler, the light source generator is configured for configuring a measurement light source, the measurement light source comprises a wavelength to be measured and a filling wavelength, the wavelength to be measured is generated by the tunable laser, and the filling wavelength is generated by the OA and the optical filter; and
an optical label measurement point, located in the to-be-measured optical path, and configured for measuring an optical power of the wavelength to be measured, to obtain optical performance of a standby optical channel corresponding to the wavelength to be measured.

11. The standby optical channel performance testing system of claim 10, wherein the idle port is a port of the local node or a port which allows access to the to-be-measured optical path at a remote node.

12. The standby optical channel performance testing system of claim 10, wherein the idle port is an optical switch, an add port or a loopback port of a Wavelength Selective Switch (WSS), an add port or a loopback port of a coupler type combiner, or an add port of an Arrayed Waveguide

13. The standby optical channel performance testing system of claim 10, wherein the optical filter and the coupler in the light source generator are replaced by a WSS, the OA is connected to an add port of the WSS, and the tunable laser is connected to a loopback port of the WSS.
